# EUROPEAN PATENT SPECIFICATION

(11) **EP 2 984 292 B1**
(45) Date of publication and mention of the grant of the patent: **06.06.2018**
(21) Application number: 14836531.5
(22) Date of filing: 11.04.2014
(51) Int. Cl.: F01D 9/02, F01D 25/28, F02C 7/20, F01D 5/22, F01D 9/04, F01D 25/24

(54) **STATOR VANE PLATFORM WITH FLANGES**
STATORSCHAUFELPLATTFORM MIT FLANSCHEN
PLATE-FORME À AUBES DE STATOR AVEC BRIDES

(30) Priority: 12.04.2013 US 201361811149 P
(43) Date of publication of application: 17.02.2016
(73) Proprietor: United Technologies Corporation, Farmington, CT 06032 (US)
(72) Inventor: DUELM, Shelton O., Wethersfield, Connecticut 06109 (US); RUGG, Kevin L., Fairfield, Connecticut 06824 (US)
(74) Representative: Magrath, Sally Ann Mason
(86) International application number: PCT/US2014/033719
(87) International publication number: WO 2015/023324

(56) References cited:
- EP-A2- 0 903 467
- JP-A- H11 125 102
- US-A- 3 966 353
- US-A- 4 015 910
- US-A- 4 492 517
- US-A1- 2005 254 944
- US-A1- 2007 065 285
- US-B1- 6 196 794
- US-B1- 6 261 058
- US-B2- 6 592 326

## Description

### BACKGROUND

Gas turbine engines typically include a compressor section, a combustor section and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow and prepare it for the next set of blades.

In turbine vane design, there is an emphasis on stress-resistant airfoil and platform designs, with reduced losses, increased lift and turning efficiency, and improved turbine performance and service life.

US 2005/254944 A1, EP 0903467 A2 and US 4492517 A each disclose a gas turbine engine, comprising a plurality of stator vanes, each of the plurality of stator vanes including an airfoil section and a platform provided at an end of the airfoil section, the platform provided with flanges on opposed ends thereof, the flanges being fastened to corresponding flanges of an adjacent one of the plurality of stator vanes.

EP 1126135 discloses a gas turbine engine according to the preamble of claim 1.

### SUMMARY

In one aspect of the disclosure, a gas turbine engine includes a plurality of stator vanes. Each of the plurality of stator vanes includes an airfoil section and a platform provided at an end of the airfoil section. The platform is provided with flanges on opposed ends thereof, and the flanges are fastened to corresponding flanges of an adjacent one of the plurality of stator vanes. At least one of the plurality of stator vanes is made of a ceramic matrix composite (CMC) material. The flanges are integrally formed with the stator vane. The gas turbine engine is characterised in that the flanges of each platform are provided on circumferential ends of the platform.

In a further embodiment of any of the above, a length dimension of the flanges is provided in a direction generally parallel to an engine central longitudinal axis.

In a further embodiment of any of the above, the flanges include inner and outer faces generally perpendicular the platform.

In a further embodiment of any of the above, the flanges are fastened to one another such that the outer faces of the flanges directly abut one another.

In a further embodiment of any of the above, the flanges include openings configured to receive fasteners.

In a further embodiment of any of the above, the fasteners include at least one of bolts, pins, and springs.

In a further embodiment of any of the above, the fasteners fasten adjacent flanges to one another.

In a further embodiment of any of the above, the fasteners fasten the flanges to a static structure of the gas turbine engine via a respective coupling.

In a further embodiment of any of the above, the gas turbine engine includes at least one resilient member connected to the flange and to the platform to reduce bending of the flange.

In a further embodiment of any of the above, each of the plurality of stator vanes includes a first platform at a radially outer end of the airfoil section, and a second platform at a radially inner end of the airfoil section, each of the first and second platforms provided with flanges on opposed ends thereof, wherein the flanges associated with the first platform are fastened to flanges of a first platform of an adjacent stator vane, and the flanges associated with the second platform are not fastened to the flanges of an adjacent stator vane to allow the second platform to be radially free.

In a further embodiment of any of the above, the gas turbine engine includes a compressor section, a combustor section, and a turbine section, the turbine section including a stationary stage, the stator vanes provided in the stationary stage.

These and other features of the present disclosure can be best understood from the following drawings and detailed description.

### BRIEF DESCRIPTION OF THE DRAWINGS

The drawings can be briefly described as follows:
Figure 1 schematically illustrates a gas turbine engine embodiment.
Figure 2 is a cross-sectional view through a high pressure turbine section.
Figure 3 is a perspective view of an example stator vane.
Figure 4 is an example stage of the gas turbine engine, showing a plurality of stator vanes.
Figures 5A-5B schematically illustrate examples for fastening adjacent stator vanes to one another.

### DETAILED DESCRIPTION

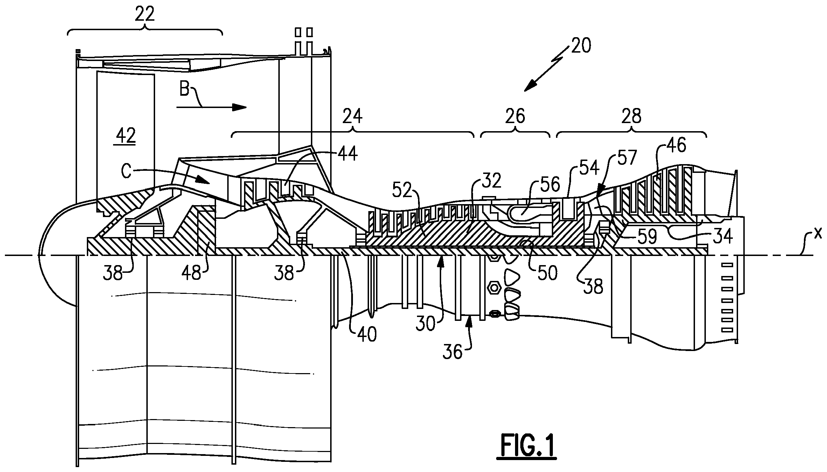

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section. The concepts disclosed herein can further be applied outside of gas turbine engines, such as in the context of wind turbines.

The example engine 20 generally includes a low speed spool 30 and a high speed spool 32 mounted for rotation about an engine central longitudinal axis X relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis X.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about five (5). The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 57 of the engine static structure 36 is arranged generally between the high pressure turbine 54 and the low pressure turbine 46. The mid-turbine frame 57 further supports bearing systems 38 in the turbine section 28 as well as setting airflow entering the low pressure turbine 46.

The core airflow C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 57 includes vanes 59, which are in the core airflow path and function as an inlet guide vane for the low pressure turbine 46. Utilizing the vane 59 of the mid-turbine frame 57 as the inlet guide vane for low pressure turbine 46 decreases the length of the low pressure turbine 46 without increasing the axial length of the mid-turbine frame 57. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft., with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R) / (518.7 °R)]^{0.5}. The "Low corrected fan tip speed", as disclosed herein according to one non-limiting embodiment, is less than about 1150 ft/second.

The example gas turbine engine includes the fan 42 that comprises in one non-limiting embodiment less than about twenty-six (26) fan blades. In another non-limiting embodiment, the fan section 22 includes less than about twenty (20) fan blades. Moreover, in one disclosed embodiment the low pressure turbine 46 includes no more than about six (6) turbine rotors schematically indicated at 34. In another non-limiting example embodiment the low pressure turbine 46 includes about three (3) turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

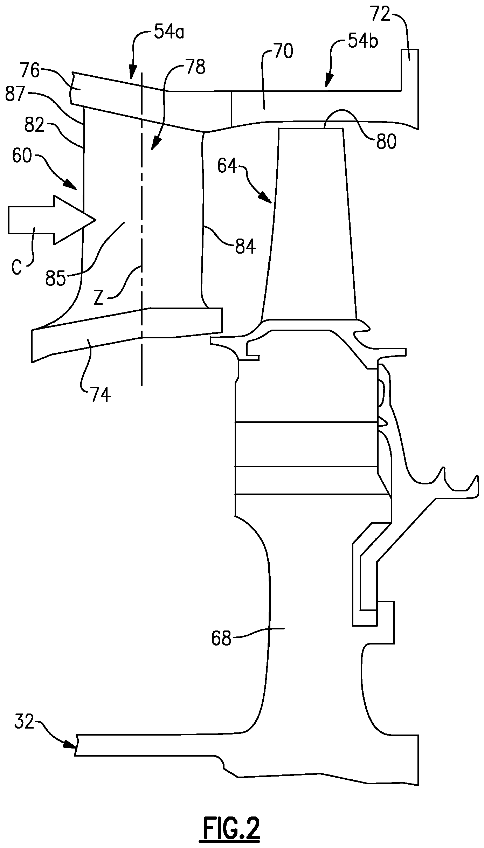

Referring to Figure 2, a cross-sectional view through a high pressure turbine section 54 is illustrated. In the example high pressure turbine section 54, a first stage array 54a of circumferentially spaced fixed vanes 60 is included. A first stage array 54b of circumferentially spaced turbine blades 64, mounted to a rotor disk 68, is arranged axially downstream of the first fixed vane array 54a.

The turbine blades each include a tip 80 adjacent to a blade outer air seal 70 of a case structure 72. The first stage array 54b of turbine blades are arranged within a core flow path C and are operatively connected to a spool 32.

Each vane 60 includes an inner platform 74 and an outer platform 76 respectively defining inner and outer flow paths. The platforms 74, 76 are interconnected by an airfoil section 78 extending in a radial direction Z. It should be understood that the turbine vanes may be discrete from one another or arranged in integrated clusters. The airfoil section 78 includes leading and trailing edges 82, 84.

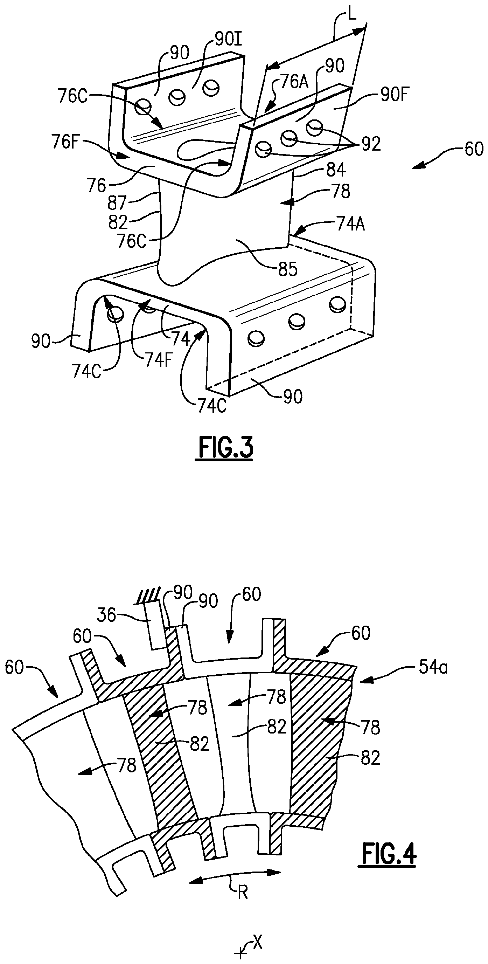

The airfoil section 78 is provided between pressure (concave) and suction (convex) sides 85, 87 in an airfoil thickness direction, which is generally perpendicular to a chord-wise direction provided between the leading and trailing edges 82, 84 (Figure 3). Multiple turbine vanes 60 are arranged circumferentially in a circumferential direction R. The airfoil section 78 typically includes multiple cooling holes (not shown).

In one example, the first stage array 54a consists of 32 turbine vanes 60, but the number may vary according to engine size. The turbine vanes 60 in one example are formed of a ceramic matrix composite (CMC) material. As is known in this art, a CMC material is one that includes fibers (such as carbon, silicon or glass fibers, as example) supported within a ceramic matrix.

Figure 3 illustrates an example stator vane 60. In this example, the stator vane 60 is a singlet, meaning the stator vane 60 includes only one airfoil section 78. This disclosure is not limited to singlets, it may be doublets, triplets etc., however. Further, while the example stator vane 60 is shown in Figure 2 in the high pressure turbine section 54, one would understand that this disclosure can be used in other sections of the engine 20 such as the mid-turbine frame 57.

In this example, the airfoil section 78 is connected to both an inner platform 74 and an outer platform 76. The inner and outer platforms 74, 76 each respectively include a fore end 74F, 76F, an aft end 74A, 76A, and circumferential ends 74C, 76C (relative to the circumferential direction R in Figure 4). As one would appreciate, the terms "fore," "aft," and "circumferential" are made with the normal operational attitude of the stator vane 60. In this example, flanges 90 are provided on opposite circumferential ends 74C, 76C of both the inner platform 74 and the outer platform 76.

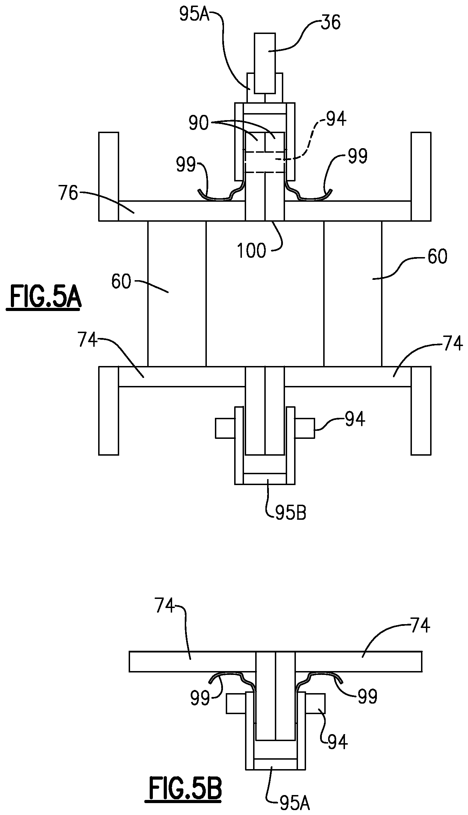

Each of the flanges 90 is provided with an inner face 90I, an outer face 90F, and a plurality of openings 92 therein. The inner and outer faces 90I, 90F extend radially in the Z direction and are generally perpendicular to the respective inner and outer platform 74, 76. Further, each of the openings 92 are configured to receive fasteners 94 (illustrated schematically in Figures 5A-5B) to fasten adjacent stator vanes 60 together, and to fasten the stator vanes 60 to a support structure, such as the engine static structure 36 (Figure 4).

With continued reference to Figure 3, flanges 90 are provided such that their length dimension L runs in a direction generally parallel to the engine central longitudinal axis X, and generally perpendicular to the radial direction Z along the circumferential ends 74C, 76C of the platforms 74, 76.

In one example, the stator vane 60 is made of a CMC material, and the flanges 90 are formed integrally with the stator vane 60 during a molding process. Because the stator vanes 60 are formed of a CMC material, they are suitable for use in the high pressure turbine section 54, however this disclosure is not limited to a particular section of the gas turbine engine 20.

Figure 4 illustrates an example arrangement of a stationary stage of the gas turbine engine 20, here the first stage array 54a. In the example, stator vanes 60 are fastened together with adjacent, similar stator vanes 60 (e.g., the stator vanes 60 each include platforms 74, 76 configured for circumferential attachment, as illustrated) such that outer faces 90F of the flanges 90 directly abut one another in a circumferential direction R, relative to the engine central longitudinal axis X, such that the outer faces 90F directly abut one another. This arrangement provides the first stage array 54a with a relatively high hoop stiffness in the circumferential direction R, which reduces deflection of the inner and outer platforms 74, 76 and maintains the overall stability of the first stage array 54a.

The adjacent stator vanes 60 can further be configured to carry a seal therebetween, for example, at a point between adjacent stator vanes 60 (illustrated at 100) to prevent leakage between the adjacent stator vanes 60.

Figures 5A-5B schematically illustrate examples for fastening adjacent stator vanes 60 together. In particular, Figures 5A-5B illustrate examples where fasteners 94, which could be nuts and bolts, are used to fasten the adjacent stator vanes 60 together. In situations where the vanes and bolts are different materials, the fasteners 94 can include beveled, or spring, washers to maintain a preload while accommodating differences in thermal growth. The fasteners 94 further tie the stator vanes 60 to couplings 95A-95B such that the adjacent stator vanes are tied together. The couplings 95A-95B essentially can act as washers and further ensure a close connection between adjacent stator vanes 60. The outer coupling 95A is connected to an engine static structure 36 in one example.

With further reference to Figures 5A-5B, and also with reference to Figure 3, the fasteners 94 are positioned within the openings 92 of adjacent flanges 90 such that the fasteners 94 are outside the gas flowpath. Thus, exposure of the fasteners 94 to exhaust gases is reduced.

With continued reference to Figures 5A-5B, resilient members 99 are positioned against the outer platform 76 (Figure 5A) and optionally against the inner platform (Figure 5B) as well. The resilient members 99 further ensure an adequate connection between the adjacent stator vanes 60 by providing additional support to the flanges 90, which aids in taking the load off of the fasteners 94 and further reduces bending of the flanges 90, in particular in the right and left relative to Figure 5A.

In an alternate configuration from those shown in Figures 5A and 5B, the flanges 90 adjacent the outer platform 76 are fastened together while the flanges 90 adjacent the inner platform 74 are not fastened together. This allows the inner platforms 74 to move freely in a radial direction, and thus can prevent fighting between the adjacent stator vanes 60, and reduces stresses experienced thereby.

Although the different examples have the specific components shown in the illustrations, embodiments of this disclosure are not limited to those particular combinations. It is possible to use some of the components or features from one of the examples in combination with features or components from another one of the examples.

One of ordinary skill in this art would understand that the above-described embodiments are exemplary and non-limiting. That is, modifications of this disclosure would come within the scope of the claims. Accordingly, the following claims should be studied to determine their true scope and content.

## Claims

1. A gas turbine engine (20), comprising a plurality of stator vanes (60), each of the plurality of stator vanes including an airfoil section (78) and a platform (74, 76) provided at an end of the airfoil section, the platform provided with flanges (90) on opposed ends thereof, the flanges being fastened to corresponding flanges of an adjacent one of the plurality of stator vanes;
wherein at least one of the plurality of stator vanes is made of a ceramic matrix composite (CMC) material;
wherein for each of the plurality of stator vanes, the flanges are integrally formed with the stator vane; and
wherein the gas turbine engine is **characterised in that** the flanges of each platform are provided on circumferential ends of the platform.

2. The gas turbine engine as recited in claim 1, wherein a length dimension of the flanges is provided in a direction generally parallel to an engine central longitudinal axis.

3. The gas turbine engine as recited in claim 1 or 2, wherein the flanges include inner (90I) and outer (90F) faces generally perpendicular to the platform.

4. The gas turbine engine as recited in any preceding claim, wherein the flanges are fastened to one another such that the outer faces of the flanges directly abut one another.

5. The gas turbine engine as recited in any preceding claim, wherein the flanges include openings (92) configured to receive fasteners (94).

6. The gas turbine engine as recited in claim 5, wherein the fasteners include at least one of bolts, pins, and springs.

7. The gas turbine engine as recited in claim 5 or 6, wherein the fasteners fasten adjacent flanges to one another.

8. The gas turbine engine as recited in claim 5, 6 or 7, wherein the fasteners fasten the flanges to a static structure of the gas turbine engine via a respective coupling (95A-95B).

9. The gas turbine engine as recited in any preceding claim, including at least one resilient member (99) connected to the flange and to the platform to reduce bending of the flange.

10. The gas turbine engine as recited in any preceding claim, further including a compressor section (24), a combustor section (26), and a turbine section (28), the turbine section including a stationary stage, wherein the stator vanes are provided in the stationary stage.

11. The gas turbine engine as recited in any preceding claim, wherein each of the plurality of stator vanes includes a first platform (76) at a radially outer end of the airfoil section, and a second platform (74) at a radially inner end of the airfoil section, each of the first and second platforms are provided with flanges on opposed ends thereof, the flanges associated with the first platform are fastened to flanges of a first platform of an adjacent stator vane, and the flanges associated with the second platform are not fastened to the flanges of an adjacent stator vane to allow the second platform to be radially free.

## Patentansprüche

1. Gasturbinentriebwerk (20), umfassend eine Vielzahl von Statorschaufeln (60), wobei jede aus der Vielzahl von Statorschaufeln einen Schaufelblattabschnitt (78) und eine Plattform (74, 76), die an einem Ende des Schaufelblattabschnitts bereitgestellt ist, umfasst, wobei die Plattform an deren gegenüberliegenden Enden mit Flanschen (90) versehen ist, wobei die Flansche an entsprechenden Flanschen einer benachbarten Statorschaufel aus der Vielzahl von Statorschaufeln befestigt werden;
wobei mindestens eine aus der Vielzahl von Statorschaufeln aus keramischem Faserverbundwerkstoffmaterial (CMC) hergestellt ist;
wobei für jede aus der Vielzahl von Statorschaufeln die Flansche einteilig mit der Statorschaufel ausgebildet sind; und
wobei das Gasturbinentriebwerk **dadurch gekennzeichnet ist, dass** die Flansche jeder Plattform auf umlaufenden Enden der Plattform bereitgestellt werden.

2. Gasturbinentriebwerk nach Anspruch 1, wobei eine Längenabmessung des Flansches in einer Richtung, die im Allgemeinen parallel zu einer zentralen Längsachse des Triebwerks liegt, bereitgestellt wird.

3. Gasturbinentriebwerk nach Anspruch 1 oder 2, wobei die Flansche Innenseiten (90I) und Außenseiten (90F) umfassen, die im Allgemeinen senkrecht zur Plattform stehen.

4. Gasturbinentriebwerk nach einem der vorstehenden Ansprüche, wobei die Flansche so aneinander befestigt werden, dass die Außenseiten der Flansche direkt aneinandergrenzen.

5. Gasturbinentriebwerk nach einem der vorstehenden Ansprüche, wobei die Flansche Öffnungen (92) umfassen, die so konfiguriert sind, dass sie Befestigungsmittel (94) aufnehmen.

6. Gasturbinentriebwerk nach Anspruch 5, wobei die Befestigungsmittel mindestens Bolzen, Stifte oder Federn umfassen.

7. Gasturbinentriebwerk nach Anspruch 5 oder 6, wobei die Befestigungsmittel benachbarte Flansche aneinander befestigen.

8. Gasturbinentriebwerk nach Anspruch 5, 6 oder 7, wobei die Befestigungsmittel die Flansche an einer statischen Struktur des Gasturbinentriebwerks über ein entsprechendes Verbindungsstück (95A-95B) befestigen.

9. Gasturbinentriebwerk nach einem der vorstehenden Ansprüche, umfassend mindestens ein elastisches Element (99), das mit dem Flansch und mit der Plattform verbunden ist, um das Biegen des Flansches zu verringern.

10. Gasturbinentriebwerk nach einem der vorstehenden Ansprüche, weiter umfassend einen Kompressorabschnitt (24), einen Brennkammerabschnitt (26) und einen Turbinenabschnitt (28), wobei der Turbinenabschnitt eine feststehende Stufe umfasst, wobei die Statorschaufeln in der feststehenden Stufe bereitgestellt sind.

11. Gasturbinentriebwerk nach einem der vorstehenden Ansprüche, wobei jede aus der Vielzahl von Statorschaufeln eine erste Plattform (76) an einem radial äußeren Ende des Schaufelblattabschnitts und eine zweite Plattform (74) an einem radial inneren Ende des Schaufelblattabschnitts umfasst, die erste und die zweite Plattform jeweils mit Flanschen an deren gegenüberliegenden Enden versehen sind, die Flansche in Verbindung mit der ersten Plattform an Flanschen einer ersten Plattform einer benachbarten Statorschaufel befestigt sind und die Flansche in Verbindung mit der zweiten Plattform nicht an den Flanschen einer benachbarten Statorschaufel befestigt sind, um es der zweiten Plattform zu ermöglichen, radial frei zu sein.

## Revendications

1. Moteur à turbine à gaz (20), comprenant une pluralité d'aubes de stator (60), chacune de la pluralité d'aubes de stator incluant une section de profil aérodynamique (78) et une plate-forme (74, 76) prévue à une extrémité de la section de profil aérodynamique, la plate-forme étant pourvue de brides (90) sur ses extrémités opposées, les brides étant fixées aux brides correspondantes d'une aube adjacente de la pluralité d'aubes de stator ;
dans lequel au moins l'une de la pluralité d'aubes de stator est constituée d'un matériau composite à matrice céramique (CMC) ;
dans lequel pour chacune de la pluralité d'aubes de stator, les brides sont formées d'un seul tenant avec l'aube de stator ; et
dans lequel le moteur à turbine à gaz est **caractérisé en ce que** les brides de chaque plate-forme sont prévues sur des extrémités circonférentielles de la plate-forme.

2. Moteur à turbine à gaz selon la revendication 1, dans lequel une dimension de longueur des brides est prévue dans une direction généralement parallèle à un axe longitudinal central du moteur.

3. Moteur à turbine à gaz selon la revendication 1 ou 2, dans lequel les brides incluent des faces interne (90I) et externe (90F) généralement perpendiculaires à la plate-forme.

4. Moteur à turbine à gaz selon une quelconque revendication précédente, dans lequel les brides sont fixées les unes aux autres de telle sorte que les faces externes des brides viennent directement en butée les unes contre les autres.

5. Moteur à turbine à gaz selon une quelconque revendication précédente, dans lequel les brides incluent des ouvertures (92) configurées pour recevoir des fixations (94).

6. Moteur à turbine à gaz selon la revendication 5, dans lequel les fixations incluent au moins l'un de vis, de goupilles et de ressorts.

7. Moteur à turbine à gaz selon la revendication 5 ou 6, dans lequel les fixations fixent les brides adjacentes les unes aux autres.

8. Moteur à turbine à gaz selon la revendication 5, 6 ou 7, dans lequel les fixations fixent les brides à une structure statique du moteur à turbine à gaz au moyen d'un accouplement (95A-95B) respectif.

9. Moteur à turbine à gaz selon une quelconque revendication précédente, incluant au moins un élément élastique (99) relié à la bride et à la plate-forme pour réduire la flexion de la bride.

10. Moteur à turbine à gaz selon une quelconque revendication précédente, incluant en outre une section de compresseur (24), une section de chambre de combustion (26) et une section de turbine (28), la section de turbine incluant un étage stationnaire, dans lequel les aubes de stator sont prévues dans l'étage stationnaire.

11. Moteur à turbine à gaz selon une quelconque revendication précédente, dans lequel chacune de la pluralité d'aubes de stator inclut une première plate-forme (76) au niveau d'une extrémité radialement externe de la section de profil aérodynamique, et une seconde plate-forme (74) au niveau d'une extrémité radialement interne de la section de profil aérodynamique, chacune des première et seconde plates-formes est pourvues de brides sur ses extrémités opposées, les brides associées à la première plate-forme sont fixées aux brides d'une première plate-forme d'une aube de stator adjacente, et les brides associées à la seconde plate-forme ne sont pas fixées aux brides d'une aube de stator adjacente pour permettre à la seconde plate-forme d'être libre radialement.
